# EUROPEAN PATENT APPLICATION

(11) **EP 0 564 211 A2**
(43) Date of publication of application: **06.10.1993**
(21) Application number: 93302425.9
(22) Date of filing: 29.03.1993
(51) Int. Cl.: C08F 10/00, C08F 4/65

(54) **Process for the preparation of a Ziegler-Natta catalyst**

(30) Priority: 03.04.1992 FR 9204374; 30.10.1992 FR 9213344; 26.08.1992 FR 9210459
(71) Applicant: BP Chemicals Limited, London EC2M 7BA (GB); BP CHEMICALS S.N.C., F-92400 Courbevoie (FR)
(72) Inventor: Jenny, Charles, F-13117 Lavera (FR)
(74) Representative: Hymers, Ronald Robson

(57) **Abstract**

The present invention relates to a process for the preparation of a catalyst of the Ziegler-Natta type based on a titanium compound precipitated by reduction of titanium on a magnesium chloride based support. The process comprises an impregnation step which comprises contacting the magnesium chloride based support with an electron donor compound D3, which is free from labile hydrogen. Polymers obtained with the catalyst prepared have a narrow molecular weight distribution.

## Description

The present invention relates to a process for the preparation of a catalyst of the Ziegler-Natta type which is based on titanium supported on particles of magnesium chloride. The catalyst is suitable for the polymerisation of olefins.

It is known that catalyst systems of the Ziegler-Natta type can consist of a supported catalyst comprising at least one compound of a transition metal, such as titanium, and a cocatalyst comprising at least one organometallic compound of a metal such as aluminium. The technique for the preparation of a supported catalyst, the properties of the support and the process for the preparation of the supported catalyst, which generally consists in fixing the transition metal compound on a support, have a very great bearing on the characteristics and the behaviour of the catalyst in the polymerisation of olefins.

According to European Patent Application EP-A-099 772 it is known to prepare a catalyst by precipitation of a transition metal compound on a spheroidal support of magnesium chloride which contains products containing a Mg-C bond and a low proportion of an electron donor compound. The transition metal compound is a halogen compound of titanium and the precipitation of the latter on the support is effected by a reaction for reduction of the titanium compound. The catalyst is good for producing ethylene polymers having a relatively broad molecular weight distribution.

According to the present invention, a process has now been found for the preparation of a catalyst supported on magnesium chloride for producing polyolefins and in particular ethylene polymers and copolymers, which have a relatively narrow molecular weight distribution. The catalyst has good catalytic activity.

The subject matter of the present invention is, therefore, a process for the preparation of a catalyst of the Ziegler-Natta type based on a titanium compound precipitated by reduction of titanium on a magnesium chloride based support, characterised in that it comprises an impregnation step which comprises contacting the magnesium chloride based support with an electron donor compound D3 which is free from labile hydrogen.

According to the invention the magnesium chloride based support is the magnesium chloride support itself or a catalyst component obtained in any one of the steps of the process and containing the magnesium chloride support.

According to the process of the invention it is preferred to perform the impregnation step separately from the other steps of the process and in particular not during the reduction step of the titanium. It is also preferred to perform this step prior to carrying out the reduction of titanium and in particular prior to contacting the magnesium chloride based support with a compound capable of reducing the titanium such as an organometallic compound. Doing this, in some cases, it is surprinsigly observed that the activity of the catalyst is not modified and even is increased.

Electron donor compound D3 can be an ether. The ether can be an aliphatic ether, such as propyl ether or butyl ether; a cyclic ether, such as tetrahydrofuran or dioxane; a polyether, preferably a diether such as dimethyl ethyleneglycol ether, diethyl ethyleneglycol ether or 2,2-dimethoxypropane. Electron donor compound D3 can also be an aliphatic ester, such as ethyl acetate; an aromatic ester, such as ethyl benzoate; an aromatic polyester, such as dibutylphthalate; a tertiary amine, such as triethylamine; an amide, such as dimethylformamide; a silane, such as tetraethoxysilane or dichlorodiethoxysilane; a silazane, such as hexamethyldisilazane; and an orthoester such as triethyl orthoacetate. Good catalysts are obtained when compound D3 is a linear or a cyclic polyfunctional compound, or a cyclic monofunctional compound. Preferably compound D3 is a diether, an orthoester or a silane.

The impregnation step can be for example carried out using from 0.01 to 2 moles, preferably from 0.05 to 1 moles, of the compound D3 per mole of magnesium in the magnesium chloride based support. It is preferably carried out with stirring in a liquid hydrocarbon, such as n-hexane or n-heptane or a mixture of the two. This impregnation step can take place at a temperature ranging from 0 to 120°C, preferably 20 to 100°C. It can take from 10 minutes to 10 hours, preferably from 30 minutes to 3 hours. To carry out this step it is possible to add the compound D3 to a stirred suspension of the magnesium chloride based support. It can take from 1 minute to 5 hours, preferably from 15 minutes to 2 hours. It is also possible to add the suspension of the magnesium chloride based support to a liquid hydrocarbon containing the compound D3 beforehand, with stirring. The compound D3 can be used in the pure form or as a solution in a hydrocarbon. At the end of the impregnation step, the magnesium chloride based support obtained can be washed once or several times with a liquid hydrocarbon.

The process of the invention also comprises the precipitation of a titanium compound on a magnesium chloride based support by means of a reduction reaction of a titanium compound during which the titanium is converted to a valency state less than 4. For this purpose the process can comprise a reduction step which comprises contacting at least one titanium compound with a magnesium chloride based support which has been contacted with an organometallic compound during a previous step.

The organometallic compound is a reducing agent for titanium and can be chosen from the organometallic compounds of metals belonging to group 11 or 111 of the Periodic Classification of the Elements. For example, it is possible to use organoaluminium, organomagnesium or organozinc compounds. It is preferred to use nonhalo-genated organoaluminium compounds such as triethylaluminium, triisobutylaluminium, tri-n-hexyl-aluminium or tri-n-octylaluminium.

The previous step of contacting the magnesium chloride based support with the organometallic compound can be for example carried out by using from 0.1 to 2 moles, preferably from 0.5 to 1.5 moles, of the organometallic compound per mole of magnesium in the magnesium chloride based support. This step is preferably carried out with stirring, within a liquid hydrocarbon such as n-hexane or n-heptane, or a mixture. It can take place at a temperature ranging from 0 to 120°C. It can take from 1 minute to 10 hours.

It is believed that most of the reducing organometallic compound fixes in the magnesium chloride based support. Nevertheless, the magnesium chloride based support resulting from the contacting with the organometallic is very advantageously washed once or several times using a liquid hydrocarbon which can be identical to or different from that of the suspension of the magnesium chloride based support. The washing operation is preferably carried out with stirring for a period which can range from 5 minutes to 2 hours. The magnesium chloride based support is often washed at a temperature ranging from 0 to 120°C. The washing operation can be repeated several times, preferably until the liquid phase of the suspension of the support is subtantially free from the reducing organometallic compound.

The titanium compound is soluble in a liquid hydrocarbon and is generally a compound in which titanium is at its maximum valency, that is to say valency 4. The titanium compound is, for example, titanium tetrachloride, titanium tetraisopropoxide, titanium tetra-n-propoxide or-a mixture of these compounds.

The amount of titanium compound used to prepare the catalyst depends on the quantity of titanium which it is desired to fix in the magnesium chloride based support. Generally, the quantity of titanium compound to be used during the reduction step is from 0.01 to 3 moles, per mole of magnesium in the magnesium chloride based support.

The reduction step is preferably carried out with stirring in a liquid hydrocarbon in which the said titanium compound is soluble such as n-hexane or n-heptane, or a mixture. The reduction step can take place at a temperature ranging from 0 to 120°C. It can take from 0.1 minute to 3 hours.

It is believed that the precipitation of the titanium compound takes place exclusively in the magnesium chloride based support. However, the support obtained can advantageously be washed once or several times.

The process of the invention can optionally comprise an additional step during which the magnesium chloride based support is contacted without rendering it soluble, with at least one electron donor compound D2 containing labile hydrogen to obtain another magnesium chloride based support. This step can be performed prior to the impregnation step of the compound D3, to obtain catalysts having a high activity. It can also be performed during the impregnation step, for example by mixing compounds D2 and D3. The compound D2 can be selected from a large number of organic compounds which are electron donors and capable of losing a hydrogen atom. Preferably, the compound D2 is chosen from alcohols or phenols. In particular, it is possible to use an alcohol containing from 1 to 12 carbon atoms, in particular ethanol, propanol, n-butanol, n-pentanol, 2-ethylhexanol or n-hexanol. It is also possible to use a phenol, such as paracresol.

The additional step can be effected for example by using from 0.1 to less than 2 moles, preferably from 0.5 to 1.5 moles, of the compound D2 per mole of magnesium in the magnesium chloride based support. It is preferably carried out with stirring within a liquid hydrocarbon such as n-hexane or n-heptane, or a mixture. It can take place at a temperature ranging from 0 to 120°C, preferably from 0 to 80°C. It can take from 10 minutes to 10 hours, preferably from 30 minutes to 5 hours. The compound D2 can be used in the pure form or as a solution in a liquid hydrocarbon. At the end of the additional step, it is often desired to obtain a magnesium chloride based support containing less than or equal to 1 mole of compound D2 per mole of magnesium.

Generally most of the compound D2 used is fixed in the magnesium chloride based support, without substantially modifying the morphology or the particle size distribution of the magnesium chloride based support. However, the magnesium chloride based support contacted with the compound D2 can be washed one or several times using a liquid hydrocarbon.

One embodiment of the present invention is a process comprising the steps:
(1) contacting the magnesium chloride based support with a compound D3
(2) contacting the magnesium chloride based support resulting from step (1) with at least an organometallic compound
(3) contacting the magnesium chloride based support resulting from step (2), possibly washed, with one or more titanium compounds. This embodiment can optionally comprise an additional step during which the magnesium chloride based support is contacted with a compound D2 prior to performing step (1).

According to the present invention the magnesium chloride based support used during the impregnation step contains preferably no or a low quantity of an electron donor compound having labile hydrogen. Typically the magnesium chloride based support contains less than or equal to 1 mole of such an electron donor compound per mole of magnesium. For this, the support is preferably not obtained by spray crystallization of a mixture of a magnesium chloride and of an electron donor compound having labile hydrogen such as an alcohol.

The Cl/Mg molar ratio of the magnesium chloride support itself is substantially equal to 2. The magnesium chloride support can be substantially free from products containing an Mg-C bond, which is equivalent to saying that the ratio of the number of Mg-C bonds to the number of magnesium atoms in the magnesium chloride support is less than 0.001. In this case the magnesium chloride support is not capable of spontaneously reducing a titanium compound.

The magnesium chloride support itself can advantageously be a preactivated support containing an electron donor compound D1, free from labile hydrogen. For example the preactivated support can contain from 80 to 99.5 mol % of magnesium dichloride and from 20 to 0.5 % of compound D1. Preferably, it contains from 80 to 95 mol % of magnesium dichloride and from 20 to 5 % of compound D1. Preferably compound D1, is homogeneously distributed throughout the magnesium chloride particle, from the core to the periphery of the latter and not solely at its periphery.

Using a preactivated support, catalysts obtained are more homogeneous and (co)polymers obtained have a narrower molecular weight distribution. Furthermore, it is preferred to use a compound D3 having a complexing power with respect to magnesium chloride which is higher than that of the electron donor compound D1. In practice this means that after the preactivated support is brought into contact with a molar quantity of compound D3 which is greater than the molar quantity of compound D1 contained in the preactivated support, the disappearance of some of the compound D1 from this support is observed. When a preactivated support is used in the process of the invention with a silane or with an orthoester as compound D3, the catalyst obtained has an activity which is up to 30 % higher than the activity of a catalyst prepared using a preactivated support, by a process similar to that of the present invention except that there is no impregnation step with a compound D3.

When a preactivated support is used in the process of the invention, the additional step of contacting the magnesium chloride based support with compound D2, is useful in the preparation of the catalyst because it will provide the possibility of fixing a relatively large amount of the titanium compound in the magnesium chloride based support and will give a catalyst free from fine or microfine particles. For this result, the compound D2 preferably has a complexing power with respect to magnesium chloride which is higher than that of the compound D1.

The electron donor compound D1 is free from labile hydrogen and, as a result is not water, an alcohol and a phenol. It has a complexing power with respect to magnesium dichloride. It is advantageously chosen from ethers, thioethers, sulphones, sulphoxides, phosphines, phosphoramides, tertiary amines and amides. It is preferred to use an electron donor compound D1 which has a low complexing power, such as an ether.

The preactivated support can be advantageously prepared by reacting a dialkylmagnesium compound with a chlorinated organic compound, in the presence of the electron donor compound D1, which acts as complexing agent and not as reactant in this preparation. For this reason, the compound D1 is preferably not capable of reacting with organomagnesium compounds. The reaction of the dialkylmagnesium compound with the chlorinated organic compound in the presence of compound D1 can advantageously be carried out as described in EP-A-336 545.

Prior to being used in the process of the invention the preactivated support can be heated to be converted to an activated support under conditions which permit an extraction of at least a part of the electron donor compound D1 from the preactivated support. For this purpose the preactivated support is in most cases heated in a liquid hydrocarbon initially free from electron donor compound D1, or containing a small quantity of this compound. When the liquid hydrocarbon contains an excessively large quantity of electron donor compound D1, it becomes difficult or even impossible to extract compound D1 from the support. In most cases the liquid hydrocarbon contains less than 0.1 % by weight of the electron donor compound D1. Typically, the liquid hydrocarbon contains from 4 to 10 carbon atoms, such as n-hexane or n-heptane. In practice the preactivated support is prepared in a liquid hydrocarbon which is then washed once or a number of times with a liquid hydrocarbon substantially free from compound D1, and then suspended in a hydrocarbon free from electron donor compound, before being heated.

In most cases the intention is to extract most, and preferably all, of the electron donor compound D1. In fact, when the activated support is brought into contact with an organoaluminium compound or with an electron donor compound during the preparation of the catalyst, the quantity of compound bound by the support increases with the quantity of electron donor compound D1 which is extracted. In most cases at least 80 % of the electron donor compound D1 is extracted from the support.

The heating conditions depend, of course, on the electron donor compound D1 and in particular on its complexing power towards magnesium dichloride and on its vapour pressure at the heating temperature. In most cases the heating temperature is higher than 40°C. Furthermore, it is often higher by at least 10°C and preferably by at least 20°C than the temperature at which the preactivated support has been prepared. However, it generally does not exceed 110°C, so as not to alter the structure of the support particles. More particularly, the preactivated support begins to become partially crystalline if it is heated to a temperature above 110°C. The heating of the preactivated support generally lasts between 10 minutes and 5 hours. When the heating operation is finished, the activated support is advantageously washed once or a number of times with a hydrocarbon free from electron donor compound.

During the heating operation an appreciable increase in the specific surface of the support can be observed.

By virtue of this heating step, it is possible to manufacture an activated support consisting of particles of magnesium dichloride free or substantially free from electron donor compound D1. It is possible, for example, to obtain particles of activated support containing, on a molar basis, from 0 to 1 % of electron donor compound D1 and from 100 to 99 % of magnesium dichloride. Generally, these particles have dimensions which are substantially identical with those of the preactivated support.

Moreover the magnesium chloride support has preferably an essentially amorphous structure, that is to say a structure where the crystalline forms have for a large part, if not completely, disappeared. This particular form for the magnesium chloride support is generally obtained by a precipitation reaction.

The magnesium chloride support itself can consist of spheroidal particles having a weight-average diameter of 10 to 100 microns, preferably of 20 to 70 microns. The particles of the support can have a very narrow particle size distribution, such that the ratio Dm/Dn of the mass-average diameter Dm to the number-average parameter Dn is less than 3 and preferably less than 2. More particularly, the particle size distribution of these particles can be extremely narrow, such that the ratio Dm/Dn is from 1.1 to 1.5; the virtually complete absence of particles having a diameter greater than 1.5 x Dm or smaller than 0.6 x Dm is noted; the particle size distribution can also be estimated by the fact that more than 90 % by weight of the particles of a given batch are within the range Dm ± 10 %.

Spheroidal particles are understood to be particles which have a substantially spherical shape. If D and d represent, respectively, the largest and the smallest axes of the particles, the ratio D/d for each particle is close to 1, generally less than or equal to 1.4 and preferably less than or equal to 1.3.

The specific surface of the magnesium chloride support can be from 20 to 100 m2/g (BET). This specific surface increases during the impregnation step, in particular when it is a preactivated support.

The catalyst obtained by the process of the invention can contain from 2 to 12 % by weight of titanium.

The catalyst obtained by the process of the invention can be used for producing (co)polymers and in particular ethylene (co)polymers by the (co)polymerisation of olefins containing from 2 to 12 carbon atoms, such as ethylene, propylene, 1-butene, 1-hexene, 4-methyl 1-pentene or 1-octene. For example, it can be used to produce high density polyethylenes, linear low density polyethylenes, or linear polyethylenes of very low density. The polyethylenes of very low density can have a melt index MI 2.16, determined at 190°C under a 2.16 kg load, from 0.1 to 10 g/10 minutes.

When the catalyst is prepared according to the process of the invention with a preactivated support, it is possible to prepare LLDPE films having good optical properties. Furthermore when a silane is used as compound D3, it is possible to prepare copolymers of ethylene for example with 1-butene, having good mechanical properties.
In particular the copolymers can be used for preparing film having a high impact resistance and/or high tear strength.

The (co)polymers can be produced in suspension or in the gas phase in a fluidised bed and/or mechanically stirred reactor. The catalyst is used in the presence of a cocatalyst chosen from the organometallic compounds of a metal belonging to groups I and III of the Periodic Classification of the elements, and if appropriate in the presence of an activator chosen from halogenated hydrocarbons. The (co)polymerisation reaction can be carried out at a temperature of between about 0°C and 100°C, preferably between 0°C and 60°C, at a total pressure ranging from 0.1 to 5 MPa. The catalysts prepared according to the invention can be used as such or after having been subjected to an operation of olefin prepolymerisation, carried out in one or more steps in the gas phase and/or in suspension in a liquid hydrocarbon medium.

During the (co)polymerisation reaction a regular development of the (co)polymer particles is observed, the shape of the particles being preserved. It is possible to obtain an ethylene (co)polymer consisting of a non-tacky powder which is made up of spheroidal particles and which has good dry flow properties and a high bulk density, generally of between 0.3 and 0.5 g/cm3.

One of the aims of the present invention is to prepare a polymerisation catalyst capable of producing (co)polymers having a molecular weight distribution which is as narrow as possible. The impregnation step is also essential. In fact, it has been found, surprisingly, that the catalyst of the invention makes it possible to obtain a (co)polymer which has a distribution which is narrower than that of a polymer obtained using a catalyst prepared by a process comprising no impregnation step with a compound D3. The (co)polymers have a narrow molecular weight distribution, characterised by a ratio of the weight-average molecular weight, Mw to the number-average molecular weight, Mn of generally less than 5 and most frequently of between 3 and 4. When the catalyst is prepared from a preactivated support with a compound D3 which is an orthoester or a silane, it is surprisingly found (co)polymers obtained have a molecular weight distribution less than 4 and have a high bulk density generally comprised between 0.3 and 0.5 g/cm3. When the catalyst is prepared from a preactivated support with a compound D3 which is dimethyl ethyleneglycol ether, (co)polymers obtained have a molecular weight distribution of about 3.5.

Moreover, (co)polymers obtained can contain a very low titanium content, generally less than 10 parts by weight per million.

The activated support described above can be also used in processes different from the process described above for the manufacture of other Ziegler-Natta type catalysts, containing at least one transition metal such as titanium, vanadium and zirconium.

For example the activated support can be used for preparing a catalyst by a process comprising the steps:
a) contacting the activated support with an ester of an aromatic acid,
b) contacting the support resulting from step (a) with titanium tetrachloride,
c) contacting the support resulting from step (b) with titanium tetrachloride.

These steps can be identical with the corresponding steps of the process for the manufacture of the catalyst described in French Patent Application n° 2,628,110. This process can comprise intermediate steps in which a support resulting from one step and in particular the support resulting form step (b), is washed with a liquid hydrocarbon. The catalyst obtained is advantageously used for the polymerisation or the copolymerisation of propylene.

The catalysts manufactured with the activated support are substantially free from fine particles and/or catalyst agglomerates. They can be used for the (co)polymerisation of olefins and in particular of ethylene, in a liquid or in gaseous phase, especially in a fluidised bed reactor. (Co)polymers obtained are in the form of particles which have a very narrow particle size distribution. Using a non-continuous polymerisation process it is possible to obtain polyolefin particles which have a so-called Malvern particle size distribution width which is smaller than 0.5.

### Malvern particle size distribution width

The Malvern particle size distribution width is measured by the ratio (D90 - D10)/D50, in which the values are defined as follows: 90% of the particles have a diameter smaller than D90, 10% of the particles have a diameter smaller than D10 and 50% of the particles have a diameter smaller than D50; these values are measured with the aid of a laser granulometer sold by the Malvern company (Great Britain) under reference 2600-C.

### Method for determination of the weight-average diameter (Dm) and number-average diameter (Dn) of particles

According to the invention, the weight-average diameter (Dm) and number-average diameter (Dn) of the magnesium chloride based supports or catalyst particles are determined according to the method described in EP-A-336 545.

### Determination of the molecular weight distribution

The molecular weight distribution of a (co)polymer is calculated in accordance with the ratio of the weight-average molecular weight, Mw to the number-average molecular weight, Mn of the (co)polymer, from a molecular weight distribution curve obtained by means of a Waters 150 C(R) gel permeation chromatograph (High Temperature Size Exclusion Chromatograph), the operating conditions being as follows:
solvent : 1,2,4-trichlorobenzene
solvent flow rate : 1 ml/minute
three Shodex(R) AT 80 M/S columns
temperature : 150°C
sample concentration : 0.1 % by weight
injection volume : 500 microlitres
detection by a refractometer integral with the chromatograph calibration with the aid of a high density polyethylene sold by BP Chemicals S.N.C. under the trade name Rigidex 6070 EA(R) Mw = 65,000 and Mw/Mn = 4, MI 2.16 = 6, and a high density polyethylene having Mw = 210,000 and Mw/Mn = 17.5.

The following examples illustrate the invention.

### Example 1

### (a) Preparation of a magnesium chloride support

204 ml (1 mole) of diisoamylether (DIAE) were introduced, at room temperature (20°C) and under a nitrogen atmosphere, into a 5-1 stainless steel reactor fitted with a stirrer system rotating at 325 revolutions/minute and containing 2 moles of dibutylmagnesium in solution in 3 l of n-hexane. The reactor was kept at 25°C. 484 ml (4.4 moles) of tertbutyl chloride were introduced in the course of 12 hours. Stirring of the mixture was then continued for 3 hours at 25°C. The solid product obtained was washed four times with 2 litres of n-hexane. 2 moles of magnesium chloride were thus obtained, the latter being in the form of spherical particles having an number-average diameter of 35 microns with a particle size distribution Dm/Dn of 1.6 and having a DIAE/Mg molar ratio = 0.10 and a Cl/Mg molar ratio = 2.

### (b) Preparation of a catalyst

300 ml of n-hexane containing 0.1 mole of magnesium chloride prepared previously were introduced, under a nitrogen atmosphere, into a 1-litre glass reactor fitted with a stirrer system rotating at a speed of 450 revolutions per minute. The reactor was then heated to 25°C and 20 ml of n-hexane containing 0.1 mole of ethanol were introduced in the course of 1 hour. At the end of this time stirring of the reactor was continued for 1 hour. At the end of this time, the solid product obtained was washed twice with 500 ml of n-hexane and the volume of n-hexane was then reduced to 300 ml. 0.9 mole of tetraethoxysilane diluted in n-hexane to give a 50 % solution was then introduced into the reactor in the course of 1 hour. Stirring of the reactor was then continued at a temperature of 50°C for 1 hour. At the end of this time, the solid product obtained was washed twice with 500 ml of n-hexane at 50°C and then twice with 500 ml of n-hexane and the volume of n-hexane of the suspension was then reduced to 300 ml. 119 ml of a triethylaluminium (TEA) solution in hexane containing 0.1 mole of TEA were introduced into the supension in the course of 1 hour. The solid obtained was maintained at 50°C for 2 hours and then washed twice with 500 ml of n-hexane at 50°C and twice with 500 ml of n-hexane at 25°C. While the temperature of the reactor was 25°C, 50 ml of n-hexane containing a mixture consisting of 10 millimoles of titanium tetrachloride and 10 millimoles of titanium tetra-n-propoxide were introduced into the reactor in the course of 1 hour. Stirring of the reactor was then continued at 80°C for 2 hours. At the end of this time the solid product obtained was washed 4 times with 500 ml of n-hexane at 80°C and 4 times with 500 ml of n-hexane at 25°C. A catalyst was then obtained which had the following characteristics:
- titanium/magnesium molar ratio : 0.20
- aluminium/magnesium molar ratio : 0.08
- trivalent titanium/total titanium molar ratio : 0.30
- chlorine/magnesium molar ratio : 2.31
- DIAE/magnesium molar ratio : 0

### (c) Suspension polymerisation of ethylene

2 litres of n-hexane heated to 50°C, 2 millimoles of triethylaluminium and a quantity of catalyst prepared previously containing 0.10 millimole of titanium were introduced, under a nitrogen atmosphere, into a 5-litre stainless steel reactor fitted with a stirrer device rotating at a speed of 750 revolutions per minute. The reactor is then heated to 80°C, and 800 ml of hydrogen, measured under standard temperature and pressure conditions, were introduced followed by ethylene until an ethylene partial pressure of 0.32 MPa. The total pressure of the reactor was kept constant at 0.5 MPa by introduction of ethylene for 2 hours. At the end of this time, 520 g of a polyethylene were recovered, the latter having the following characteristics:
- MI 2.16 : 0.55 g/10 minutes
- Number-average molecular weight : 123 000
- Molecular weight distribution : 3.7

### Example 2

### (a) Preparation of a magnesium chloride support

8.1 l (40 moles) of diisoamylether (DIAE) were introduced, at room temperature (20°C) and under a nitrogen atmosphere, into a 300-1 stainless steel reactor fitted with a stirrer system rotating at 135 revolutions/minute and containing 80 moles of dibutylmagnesium in solution in 133.3 l of n-hexane. The reactor was kept at 30°C. 19.3 l (176 moles) of tertbutyl chloride were introduced in the course of 12 hours. Stirring of the mixture was then continued for 2 hours at 30°C. The solid product obtained was washed 7 times with 130 litres of n-hexane. 73.2 moles of magnesium chloride were thus obtained, the latter being in the form of spherical particles having an number-average diameter of 35 microns with a particle size distribution Dm/Dn of 1.5 and having a DIAE/Mg molar ratio of 0.108 and a Cl/Mg molar ratio of 2.14

### (b) Preparation of a catalyst

110 l of n-hexane containing 30 moles of magnesium chloride prepared previously were introduced, under a nitrogen atmosphere, into a 300-1 stainless steel reactor fitted with a stirrer system rotating at a speed of 166 revolutions per minute. The reactor was then heated to 25°C and 30 l of n-hexane containing 30 moles of n-propanol were introduced in the course of 1 hour. At the end of this time stirring of the reactor was continued for 1 hour. At the end of this time, the solid product obtained was washed three times with 130 1 of n-hexane and the volume of n-hexane was then reduced to 110 1. 27 moles of tetraethoxysilane diluted in n-hexane to give a 50% solution was then introduced into the reactor in the course of 1 hour. Stirring of the reactor was then continued at a temperature of 50°C for 1 hour. At the end of this time, the solid product obtained was washed twice with 130 l of n-hexane at 50°C and then 3 times with 130 l of n-hexane and the volume of n-hexane of the suspension was then reduced to 110 l. 30 l of a TEA solution in hexane containing 30 moles of TEA were introduced into the supension maintained at 50°C in the course of 1 hour. The solid obtained was maintained at 50°C for 1 hour and then-washed 3 times with 130 l of n-hexane at 50°C and 6 times with 130 l of n-hexane at 25°C. When the temperature of the reactor was 25°C, 15 l of n-hexane containing a mixture consisting of 3 moles of titanium tetrachloride and 3 moles of titanium tetra-n-propoxide were introduced into the reactor in the course of 1.5 hours. Stirring of the reactor was then continued at 80°C for 1 hour. At the end of this time the solid product obtained was washed twice with 130 l of n-hexane at 80°C and 7 times with 130 l of n-hexane at 25°C. A catalyst was then obtained which had the following characteristics:
- titanium/magnesium molar ratio : 0.20
- aluminium/magnesium molar ratio : 0.022
- trivalent titanium/total titanium molar ratio : 0.317
- chlorine/magnesium molar ratio : 2.61
- DIAE/magnesium molar ratio : 0

### (c) Preparation of a prepolymer

The catalyst is converted into the form a prepolymer in a 1 m3 stainless steel reactor fitted with a stirring system rotating at 140 revolutions per minute. Into this reactor were introduced under nitrogen atmosphere 450 l of n-hexane, which was heated to 50°C, followed by a quantity of catalyst previously prepared corresponding to 1.25 moles of titanium and then by 1 mole of tri-n-octylaluminium. Hydrogen was introduced into the reactor at 70°C to obtain a partial pressure of 0.1 MPa and then to represent 30 % volume of the gas phase in the reactor. Ethylene was then introduced for 6 hours and 40 minutes at a rate of 15 kg/h. After the end of the introduction of ethylene the reactor was stirred for 30 minutes. At the end of this time the reactor is degassed. The prepolymer obtained was dried under a stream of nitrogen at 70°C and was isolated in the form of a dry powder.

### (d) Gas phase copolymerisation of ethylene

The operation was carried out in a fluidised bed reactor consisting of a vertical cylinder 0.45 m in diameter, 6 m in height, fitted in its lower part with a fluidised grid and supporting a dissengagement chamber. This reactor is fitted with an external conduit for recycling a reaction gas mixture connecting the top of the reactor to the lower part of the reactor, situated under the fluidisation grid and which is equipped with a compressor and with a heat exchanger.

The reactor contained a fluidised bed maintained at a constant height of 2 m above the fluidisation grid, which consisted of 80 kg of a linear low density ethylene copolymer.

A gas mixture at a temperature of 80°C and containing by volume 28 % of ethylene, 11 % of 1-butene, 3.6 % of hydrogen and 57.4 % of nitrogen at a pressure of 1.7 MPa entered the base of the fluidised bed reactor at a rate of 260 m³ and passed upwards through the fluidised bed with a fluidisation velocity of 0.45 m/s.

The prepolymer previously prepared was introduced intermittently in the course of time into the gas phase fluidised-bed reactor at a rate of 0.01 kg of prepolymer every 6 minutes. Simultaneously a solution of triethyaluminium in n-hexane containing 0.06 mole of TEA per litre was introduced at a rate of 0.3 l/h into the conduit for recycling the reaction gas mixture, at a point situtated upstream and close to the heat exchanger. 14 kg/hour of a copolymer were produced under these conditions. The copolymer obtained had the following caracteristics:
- MI 2.16 : 0.55 g/10 minutes
- Molecular weight distribution : 3.7

### Example 3

### (a) Preparation of a magnesium chloride support

The magnesium chloride support was prepared as in Example 2 (a) except that the speed of the rotating stirrer was 135 revolutions per minute instead of 166 revolutions per minutes. 79.2 moles of magnesium chloride were thus obtained, the latter being in the form of spherical particles having an number-average diameter of 33 microns with a particle size distribution Dm/Dn of 1.03 and having a DIAE/Mg molar ratio of 0.126.

### (b) Preparation of a catalyst

18.2 1 of n-hexane containing 6 moles of magnesium chloride prepared previously were introduced, under a nitrogen atmosphere, into a 30-litres stainless steel reactor fitted with a stirrer system rotating at a speed of 350 revolutions per minute. The reactor was then heated to 70°C for 1 hour. The solid product obtained was washed twice with 15 l of n-hexane at 70°C and twice with 15 l of n-hexane at 25°C. The volume of supension was then reduced to 18.2 1. 0.6 mole of triethyl orthoacetate diluted in 1.625 l of n-hexane was then introduced into the reactor at 25°C in the course of 1 hour. Stirring of the reactor was then continued at a temperature of 25°C for 1 hour. At the end of this time, the solid product obtained was washed 4 times with 15 l of n-hexane and the volume of n-hexane of the suspension was then reduced to 18.2 l. 6 l of a TEA solution in hexane containing 6 moles of TEA were introduced into the supension maintained at 50°C in the course of 1 hour. The solid obtained was maintained at 50°C for 1 hour and then washed twice with 15 l of n-hexane at 50°C and 3 times with 15 l of n-hexane at 25°C. The volume of n-hexane of the supension was reduced to 10 l. 3 l of n-hexane containing a mixture consisting of 0.6 mole of titanium tetrachloride and 0.6 mole of titanium tetra-n-propoxide were introduced into the reactor in the course of 1 hour. Stirring of the reactor was then continued at 80°C for 1 hour. At the end of this time the solid product obtained was washed twice with 15 l of n-hexane at 80°C and 4 times with 15 l of n-hexane at 25°C. A catalyst was then obtained which had the following characteristics :
- titanium/magnesium molar ratio : 0.075
- aluminium/magnesium molar ratio : 0.005
- trivalent titanium/total titanium molar ratio : 0.356
- chlorine/magnesium molar ratio : 2.35
- DIAE/magnesium molar ratio : 0

### (c) Preparation of a prepolymer

A prepolymer was prepared as in Example 2 (c) except that a quantity of catalyst prepared in Example 3 (b) corresponding to 0.446 mole of titanium was used instead of the catalyst prepared at Example 2 (b), and that 0.714 mole of TnOA were used instead of 1 mole, and in that the ethylene was feed to the reactor at a feed rate of 10 kg/h during 5 hours and 20 minutes instead of 15 kg/h during 6 hours and 40 minutes.

### (d) Gas phase polymerisation

The operation was carried out in the reactor described in Example 2.

The reactor contained a fluidised bed maintained at a constant height of 2 m above the fluidisation grid, which consisted of 80 kg of a linear low density ethylene copolymer.

A gas mixture at a temperature of 80°C and containing by volume 17 % of ethylene, 5 % of 4-methyl 1-pentene, 2 % of hydrogen and 76 % of nitrogen at a pressure of 1.7 MPa entered the base of the fluidised bed reactor at a rate of 260 m³ and passed upwards through the fluidised bed with a fluidisation velocity of 0.45 m/s.

The prepolymer previously prepared was introduced intermittently in the course of time into the gas phase fluidised-bed reactor at a rate of 0.02 kg of prepolymer every 6 minutes. Simultaneously a solution of triethyaluminium in n-hexane containing 0.06 mole of TEA per litre was introduced at a rate of 0.35 l/h into the conduit for recycling the reaction gas mixture, at a point situtated upstream and close to the heat exchanger. 20 kg/hour of a copolymer were produced under these conditions. The copolymer obtained had the following caracteristics:
- MI 2.16 : 0.55 g/10 minutes
- Molecular weight distribution : 3.7

### Example 4

### (a) Preparation of an activated support

600 ml of n-hexane and 0.2 mole of magnesium chloride support prepared in Example 1 (a) were introduced under nitrogen atmosphere into a 1-litre glass reactor fitted with a stirring system rotating at 450 revolutions per minute. The reactor was then heated to 50°C and kept at this temperature for 1 hour. The solid obtained was then washed twice with 0.5 litre of n-hexane at a temperature of 50°C and then twice at 25°C with 0.5 litre of n-hexane. The suspension volume was reduced to 250 ml by removal of n-hexane. A suspension of activated support was thus obtained, which activated support contained, on a molar basis, 0.8 % of diisoamyl ether and 99.2 % of magnesium dichloride, and consisted of particles having dimensions that were substantially identical with those of the preactivated support.

### (b) Preparation of a catalyst

0.174 mole of tetraethoxysilane diluted to 50 % of n-hexane were introduced at 25°C and over 1 hour into the reactor containing the suspension of activated support. After being held at 50°C for 1 hour, the solid obtained was washed twice at 50°C with 0.5 litre of n-hexane and twice at 25°C with 0.5 litre of n-hexane. The volume of suspension was reduced to 250 ml by removal of n-hexane. 238 ml of n-hexane containing 0.2 mole of triethylaluminium were then introduced over 1 hour at 50°C. After being maintained for 1 hour at 50 °C, the solid obtained was washed twice with 0.5 litre of n-hexane at 50°C and twice with 0.5 litre of n-hexane at 25°C. The suspension volume was reduced to 250 ml. 100 ml of n-hexane containing a mixture consisting of 20 millimoles of titanium tetrachloride and 20 millimoles of titanium n-tetrapropoxide were then introduced over 1 hour at 25°C. After the reactor had been maintained for 1 hour at 80°C the solid obtained was washed four times at 80°C with 0.5 litre of n-hexane and then four times at 25°C with 0.5 litre of n-hexane. A catalyst having the following molar ratios was then obtained :
- titanium/magnesium : 0.144
- aluminium/magnesium : 0.012
- trivalent titanium/total titanium : 0.330
- chlorine/magnesium : 2.32
- DIAE/magnesium : 0

### (c) Suspension polymerisation of ethylene

Into a 5-litre stainless steel reactor fitted with a stirring device rotating at 750 revolutions per minute were introduced, under nitrogen atmosphere, 2 litres of n-hexane which were heated to 50°C followed by 2 millimoles of triethylaluminium and a quantity of catalyst prepared previously, corresponding to 0.30 millimole of titanium. The temperature of the reactor was raised to 80°C and hydrogen was introduced into it so as to obtain a partial pressure of 0.14 MPa, followed by ethylene so as to obtain a partial pressure of 0.26 MPa. The reactor pressure was kept constant at 0.5 MPa by continuous addition of ethylene during 2 hours and 5 minutes. At the end of this time the polymer present in the reactor was recovered and then analysed. The results of the analyses performed were the following :
- polymer produced : 593 g
- average catalyst activity : 548 g of polyethylene per millimole of titanium, per hour of reaction and per 0.1 MPa of ethylene
- melt index measured at 190°C under 2.16 kg, MI 2.16 1.35 g/10 minutes
- melt index measured at 190°C under 21.6 kg, MI 21.6: 35.06 g/10 minutes
- flow parameter : 1.41
- number average diameter : 400 microns
- percentage of the polymer particles which had a diameter greater than 630 microns : 0.4 %
- percentage of the polymer particles which had a diameter smaller than 125 microns : 0.7 %
- percentage of the polymer particles which had a diameter of between 350 and 500 microns : 96.1 %
- apparent density of the polymer : 0.40 g/cm3

### Example 5

### (a) Preparation of a preactivated support

In order to obtain a preactivated support the operation was carried out as in Example 1 (a) except for the fact that the stirring speed was 525 revolutions per minute instead of 350 revolutions per minute. Under these conditons a preactivated magnesium chloride support was obtained consisting of particles which had a number-average diameter of 28 microns, which contained, on a molar basis, 6.6 % of DIAE and 93.4 % of magnesium dichloride.

### (b) Preparation of an activated support

600 ml of n-hexane and 0.2 mole of preactivated magnesium chloride support prepared above, which had been washed twice with 500 ml of n-hexane beforehand were introduced under nitrogen atmosphere into a one-litre glass reactor fitted with a stirring system rotating at 450 revolutions per minute. The reactor was heated to 50°C and kept at this temperature for 1 hour. The solid obtained was washed twice with 0.5 litre of n-hexane at a temperature of 50°C and then twice at 25°C with 0.5 litre of n-hexane. The suspension volume was reduced to 250 ml by removal of n-hexane. A suspension of activated magnesium chloride support was thus obtained, which support contained, on a molar basis, 0.6 % of diisoamyl ether and 99.4 % of magnesium dichloride, and consisted of particles having dimensions substantially identical with those of the preactivated support.

### (c) Preparation of a catalyst

0.020 mole of triethyl orthoacetate contained in 50 ml of n-hexane were introduced at 25°C and over 1 hour into the reactor containing the activated support suspension. After being maintained for 1 hour at 25°C, the solid obtained was washed four times at 25°C with 0.5 litre of n-hexane. The volume of the suspension was reduced to 250 ml by removal of n-hexane. 238 ml of n-hexane containing 0.2 mole of triethylaluminium were introduced next over 1 hour at 50°C. After being maintained for 1 hour at 50°C the solid obtained was washed twice with 0.5 litre of n-hexane at 50°C and twice with 0.5 litre of n-hexane at 25°C. The suspension volume was reduced to 250 ml. 100 ml of n-hexane containing a mixture consisting of 20 millimoles of titanium tetrachloride and 20 millimoles of titanium tetra-n-propoxide were introduced next over 1 hour at 25°C. After being maintained for 1 hour at 80°C the solid obtained was washed four times at 80°C with 0.5 litre of n-hexane and then four times at 25°C with 0.5 litre of n-hexane. A catalyst having the following molar ratios was then obtained:
- titanium/magnesium : 0.190
- aluminium/magnesium : 0.021
- trivalent titanium/titanium : 0.39
- chloride/magnesium : 2.35
- DIAE/magnesium : 0

### (d) Preparation of an ethylene prepolymer

Into a 5-litre stainless steel reactor fitted with a stirring device rotating at 750 revolutions per minute were introduced, under nitrogen atmosphere, 2 litres of n-hexane which were heated to 50°C, followed by 1.6 millimoles of tri-n-octylaluminium and a quantity of catalysts prepared above, corresponding to 2.0 millimoles of titanium. The temperature of the reactor was raised to 70°C and hydrogen was then introduced into it so as to obtain a partial pressure of 0.05 MPa. Ethylene was then introduced at a constant rate of 24 g/h during 6 hours and 40 minutes. At the end of this time a prepolymer was recovered which was kept under nitrogen atmosphere.

### (e) Gas phase polymerisation of ethylene

200 g of polymer powder originating from a preceding polymerisation and which had been stored under nitrogen were introduced under nitrogen atmosphere as a powder charge into a 2.5-litre stainless steel reactor fitted with a helical stirring system for dry powder rotating at 500 revolutions per minute. After the reactor had been heated to 50°C, 2 millimoles of triethylaluminium were introduced, followed by a quantity of prepolymer prepared above corresponding to 0.138 millimole of titanium. The temperature of the reactor was then raised to 80°C and a quantity of hydrogen was then introduced into it so as to obtain a partial pressure of 0.4 MPa and a quantity of ethylene so as to obtain a total pressure of 0.8 MPa. Ethylene was introduced into the reactor during the reaction so as to keep the total pressure constant. After 3 hours' reaction 200 g of polymer powder were drawn off from the reactor. The polymerisation reaction was then continued under the same conditions for 1 hour and 40 minutes, before drawing off 200 g of polymer from the reactor. The polymerisation reaction was then continued under the same conditions for 6 hours and 40 minutes. At the end of this time the polymer contained in the reactor was recovered and then analysed. The results of the analyses carried out were the following:
- titanium content : 6 ppm
- melt index MI 2.16 : 5.4 g/10 minutes
- melt index MI 8.5 : 36.6 g/10 minutes
- melt index MI 0.325 : 0.50 g/10 minutes
- flow parameter : 1.31
- number-average diameter : 545 microns
- Malvern width of the particle size distribution of the polymer particles : 0.64
- percentage of polymer particles which had a diameter of less than 125 microns : 0.0 %
- apparent density : 0.44 g/cm3

### Example 6

### (a) Preparation of an activated support

The operation was carried out as in Example 5 (b).

### (b) Preparation of a catalyst

The operation was carried out as in Example 5 (c)

### (c) Suspension polymerisation of ethylene

Into a 5-litre stainless steel reactor fitted with a stirring device rotating at 750 revolutions per minute were introduced, under nitrogen atmosphere, 2 litres of n-hexane which were heated to 50°C, followed by 2 millimoles of triethylaluminium and a quantity of catalyst prepared above corresponding to 0.3 millimoles of titanium. The temperature of the reactor was raised to 80°C and hydrogen was introduced into it so as to obtain a partial pressure of 0.14 MPa, followed by ethylene so as to obtain a partial pressure of 0.26 MPa. The total reactor pressure was kept constant at 0.5 MPa by addition of ethylene during 2 hours. The polymer contained in the reactor was then recovered and then analysed. The results of the analyses performed were the following :
- polymer output : 670 g
- average catalyst activity : 430 g of polyethylene/mM h 0.1 MPa
- melt index MI 2.16 : 4.34 g/10 minutes
- melt index MI 8.5 : 26.5 g/10 minutes
- melt index MI 0.325 : 0.51 g/10 minutes
- flow parameter : 1.21
- number-average diameter of the polymer particles : 361 microns
- Malvern width of the particle size distribution of the polymer particles : 0.42
- percentage of the particles which had a diameter of less than 125 microns : 0.0 %
- apparent density : 0.40 g/cm3

## Claims

1. A process for the preparation of a catalyst of the Ziegler-Natta type based on a titanium compound precipitated by reduction of titanium on a magnesium chloride based support, characterised in that it comprises an impregnation step which comprises contacting the magnesium chloride based support with an electron donor compound D3, which is free from labile hydrogen.

2. A process according to Claim 1, characterised in that the reduction comprises contacting at least one titanium compound with the magnesium chloride based support which had been previously contacted with an organometallic compound.

3. A process according to Claim 1 or 2, characterised in that the compound D3, is a linear or a cyclic polyfunctional compound, or a cyclic monofunctional compound.

4. A process according to any one of Claims 1 to 3, characterised in that the compound D3, is a silane, a diether, or an orthoester.

5. A process according to any one of Claims 1 to 4, characterised in that it uses a magnesium chloride support which is a preactivated support containing an electron donor compound D1, free from labile hydrogen.

6. A process according to Claim 5, characterised in that the magnesium chloride support is prepared by a precipitation reaction between a dialkylmagnesium and an organic chlorine compound, in the presence of the compound D1.

7. A process according to Claim 5 or 6, characterised in that compound D3 has a complexing power towards the magnesium chloride higher than that of compound D1.

8. A process according to any one of Claims 5 to 7, characterised in that prior to being used in the process, the magnesium chloride support is heated under conditions which permit an extraction from the support of at least a part of the compound D1.

9. A process according to Claim 8, characterised in that the magnesium chloride support is heated in a liquid hydrocarbon containing less than 0.1 % by weight of compound D1.

10. A process according to any one of Claims 5 to 9, characterised in that it comprises the steps:
(1) contacting the magnesium chloride based support with the compound D3,
(2) contacting the magnesium chloride based support resulting from step (1) with at least one organometallic compound,
(3) contacting the magnesium chloride based support resulting from step (2) possibly washed, with one or more titanium compounds.

11. A process according to any one of Claims 1 to 10, characterised in that it comprises an additional step during which the magnesium chloride based support is contacted with at least one electron donor compound D2 containing labile hydrogen.

12. Use of the catalyst prepared according to the process of any one of Claims 1 to 11, in an olefin (co)polymerisation.

13. A Ziegler-Natta type catalyst obtainable by the process of any one of Claims 1 to 11.

14. Process for the manufacture of an activated magnesium chloride support, characterised in that a preactivated support consisting of particles of magnesium chloride comprising magnesium dichloride and an electron-donor compound D1, without labile hydrogen, is heated under conditions which permit an extraction from the support of at least a part of the electron-donor compound D1.

15. Process according to Claim 14, characterised in that the preactivated support is heated to a temperature higher than 40°C.

16. Use of the activated support obtained according to the process of Claim 14 or 15, for the manufacture of a Ziegler-Natta type catalyst.

17. Polyolefin particles having a Malvern width of particle size distribution lower than 0.5.
